Europäisches Patentamt

European Patent Office

Office européen des brevets

(19)

(11) Numéro de publication : **0 045 920**
**B1**

(12) # FASCICULE DE BREVET EUROPÉEN

(45) Date de publication du fascicule du brevet :
07.11.84

(51) Int. Cl.³ : **H 02 K   3/47**

(21) Numéro de dépôt : 81106045.8

(22) Date de dépôt : 03.08.81

(54) Dispositif de fixation des barres d'enroulement statoriques d'une machine dynamoélectrique tournante.

(30) Priorité : 07.08.80 FR 8017445

(43) Date de publication de la demande :
17.02.82 Bulletin 82/07

(45) Mention de la délivrance du brevet :
07.11.84 Bulletin 84/45

(84) Etats contractants désignés :
AT BE CH DE FR GB IT LI LU NL SE

(56) Documents cités :
FR-A- 1 464 588
FR-A- 2 167 690
FR-A- 2 287 798
FR-A- 2 324 145
FR-A- 2 331 184
FR-A- 2 401 539
US-A- 1 756 672

(73) Titulaire : **ALSTHOM-ATLANTIQUE Société anonyme dite:**
**38, Avenue Kléber**
**F-75784 Paris Cédex 16 (FR)**

**ELECTRICITE DE FRANCE Service National**
**2, rue Louis Murat**
**F-75008 Paris (FR)**

(72) Inventeur : **Gillet, Roger**
**24 avenue d'Altkirch**
**F-90000 Belfort (FR)**

(74) Mandataire : **Weinmiller, Jürgen et al**
**Zeppelinstrasse 63**
**D-8000 München 80 (DE)**

## Description

La présente invention concerne un dispositif de fixation des barres d'enroulement statoriques d'une machine dynamoélectrique tournante, pour fixer ces barres dans l'entrefer selon une direction « longitudinale » parallèle à l'axe de rotation du rotor en les appliquant contre la surface interne du circuit magnétique statorique, cette surface présentant la forme générale d'un cylindre dont l'axe est l'axe de rotation du rotor, ce dispositif comportant

— des dents d'accrochage non métalliques dont la forme générale est celle d'un prisme à génératrices longitudinales, ces dents présentant un pied accroché au circuit magnétique statorique et un corps formant saillie radiale vers l'intérieur à partir de la surface interne de ce circuit magnétique, ces dents étant réparties angulairement sur tout le tour de cette surface,

— des moyens de calage tangentiels pour caler les barres d'enroulement entre les corps des dents angulairement successives,

— et des moyens de calage radial empêchant un déplacement radial des barres d'enroulement par rapport aux corps de ces dents en appuyant ces barres contre la surface interne du circuit magnétique statorique.

On voit que, dans le type de stator sans encoches connu auquel l'invention s'applique les barres, au lieu d'être calées au fond d'encoches creusées dans le circuit magnétique du stator, sont appliquées contre la surface intérieure cylindrique de ce circuit magnétique, et que la fixation de ces barres se fait par accrochage au circuit magnétique statorique. Divers moyens d'accrochage ont été utilisés tels que des vis ou des queues d'aronde. Ils prennent appui sur le circuit magnétique pour permettre de tirer les barres radialement vers l'extérieur jusqu'à les appliquer contre la surface intérieure de ce circuit. Etant donné qu'ils pénètrent dans ce circuit pour y prendre appui radialement, le dispositif peut assurer en même temps l'immobilisation tangentielle des barres c'est-à-dire empêcher que leur position angulaire ne varie.

Ces dispositifs de fixation connus utilisant un accrochage des barres au circuit magnétique présentent des inconvénients tels que :

— L'encombrement dû à l'utilisation de vis isolantes dont les caractéristiques mécaniques faibles nécessitent un large dimensionnement.

— Ou la présence dans l'entrefer de tôles métalliques utilisées pour constituer les dents d'accrochage. Le pied de ces dernières forme une queue d'aronde engagée dans le circuit magnétique statorique. Ces tôles métalliques assurent une bonne résistance mécanique et ne sont pas magnétiques mais elles sont sujettes à des pertes par effet Joule en raison des fortes inductions magnétiques variables (voir figure 8 du brevet américain 3 405 297 au nom de Madsen).

— Et/ou la difficulté de démontage ou d'accès pour mermettre de parfaire l'immobilisation des barres, ou de changer les barres lorsque des dispositifs de calage ont pris du jeu après un service prolongé ou lorsqu'une barre est détériorée.

Le montage et le démontage sont rendus d'autant plus longs et coûteux que les dispositifs connus comportent un grand nombre de coins à enfoncement radial, tangentiel ou longitudinal pour assurer l'immobilisation tant tangentielle que radiale des barres par rapport aux dents.

La présente invention a pour but la réalisation d'un dispositif de fixation des barres d'enroulement statoriques d'une machine dynamoélectrique tournante, permettant d'utiliser des dents d'accrochage isolantes tout en facilitant le montage, le démontage et la réparation et sans présenter d'encombrement excessif.

Elle a pour objet un dispositif de fixation des barres d'enroulement statoriques d'une machine dynamoélectrique tournante pour fixer ces barres dans l'entrefer selon une direction « longitudinale » parallèle à l'axe de rotation du rotor en les appliquant contre la surface interne du circuit magnétique statorique, cette surface présentant la forme générale d'un cylindre dont l'axe est l'axe de rotation du rotor, ce dispositif comportant :

— des dents d'accrochage non métalliques dont la forme générale est celle d'un prisme à génératrices longitudinales, ces dents présentant un pied accroché au circuit magnétique statorique et un corps formant saillie radiale vers l'intérieur à partir de la surface interne de ce circuit magnétique, ces dents étant réparties angulairement sur tout le tour de cette surface,

— des moyens de calage tangentiels pour caler les barres d'enroulement entre les corps des dents angulairement successives,

— et des moyens de calage radial empêchant un déplacement radial des barres d'enroulement par rapport aux corps de ces dents en appuyant ces barres contre la surface interne du circuit magnétique statorique,

— ce dispositif étant caractérisé par le fait que les dents d'accrochage angulairement successives sont alternativement une dent longue et une dent courte, les dents longues seules ayant une tête dépassant radialement vers l'intérieur au-delà des barres d'enroulement,

— les moyens de calage tangentiel des barres étant des coins à enfoncement radial vers l'extérieur insérés chacun entre des barres (12) d'enroulement et le flanc d'une autre dent,

— les moyens de calage radial des barres comportant des barrettes fixées aux têtes des seules dents longues et s'étendant tangentiellement entre ces têtes pour venir appuyer radialement vers l'extérieur sur les faces des barres d'enroulement disposées entre ces dents longues.

On voit que selon la présente invention la force nécessaire à l'appui radial de toutes les barres contre la surface interne du circuit magnétique est assurée par une dent d'accrochage sur deux seulement, alors même que cette dent n'est pas métallique. Néanmoins les efforts tangentiels sont supportés par toutes les dents.

A l'aide des figures schématiques ci-jointes, on va décrire ci-après, à titre non limitatif, comment l'invention peut être mise en œuvre.

La figure 1 représente une vue partielle schématique d'un dispositif selon l'invention, en coupe par un plan perpendiculaire à l'axe de la machine.

La figure 2 représente une vue en perspective d'une dent longue du dispositif de la figure 1, avec ses deux coins de calage à enfoncement longitudinal.

La figure 3 représente une vue partielle de côté, selon une ligne III-III de la figure 1, de deux dents longues longitudinalement successives du même dispositif, le plan de cette figure étant parallèle à l'axe de la machine.

La figure 4 représente une vue en coupe d'une dent longue du même dispositif, le plan de coupe étant perpendiculaire à l'axe de la machine.

La figure 5 représente un détail V de la figure 4.

La figure 6 représente une vue en coupe d'une dent longue susceptible d'être utilisée à la place de celle de la figure 4.

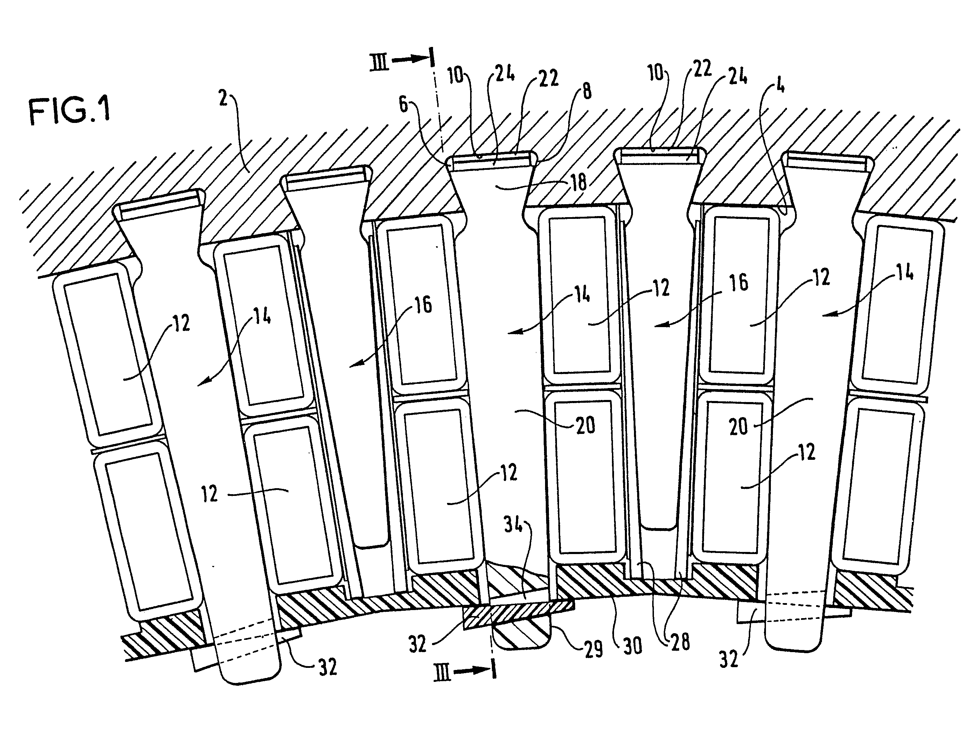

Le dispositif est monté sur le circuit magnétique 2 du stator d'un alternateur de puissance dont le rotor tourne autour d'un axe non visible sur les figures et perpendiculaire au plan de la figure 1. Cet axe est celui de la machine et aussi celui de la surface interne 4 de ce circuit, cette surface étant cylindrique de révolution. C'est par rapport à cet axe que sont définies en chaque point les directions « longitudinales », c'est-à-dire parallèle à cet axe, « radiale » c'est-à-dire coupant cet axe à angle droit, et « tangentielle » c'est-à-dire perpendiculaire à la fois à l'axe et à la direction radiale passant par ce point.

Le circuit magnétique statorique 2 est constitué classiquement de tôles d'acier magnétique perpendiculaires à l'axe et empilées longitudinalement.

Dans la surface interne de ce circuit ont été creusées des fentes longitudinales 6 à section trapézoïdale, la petite base du trapèze coïncidant sensiblement avec la surface interne 4 du circuit magnétique. Ces fentes sont réparties angulairement de manière régulière. Chacune d'elles présente deux faces latérales 8 et un fond 10. Elles permettent un accrochage classique du type à queue d'aronde.

Des barres d'enroulement 12 sont disposées longitudinalement, et accrochées en appui contre la surface, dans les intervalles entre les fentes 6, grâce au dispositif de fixation qui va être maintenant décrit.

Ce dispositif comporte des dents d'accrochages telles que 14 ou 16 accrochées dans les fentes 6 par engagement longitudinal à partir d'une extrémité du circuit magnétique. Chacune de ces dents présente la forme générale d'un prisme à génératrices longitudinales et comporte :

— un pied 18 dont la section présente la forme générale d'un trapèze ayant une grande base et une petite base disposées selon la direction « tangentielle », et deux côtés reliant ces deux bases,

— et un corps 20 s'étendant selon la direction « radiale » à partir de la petite base du trapèze.

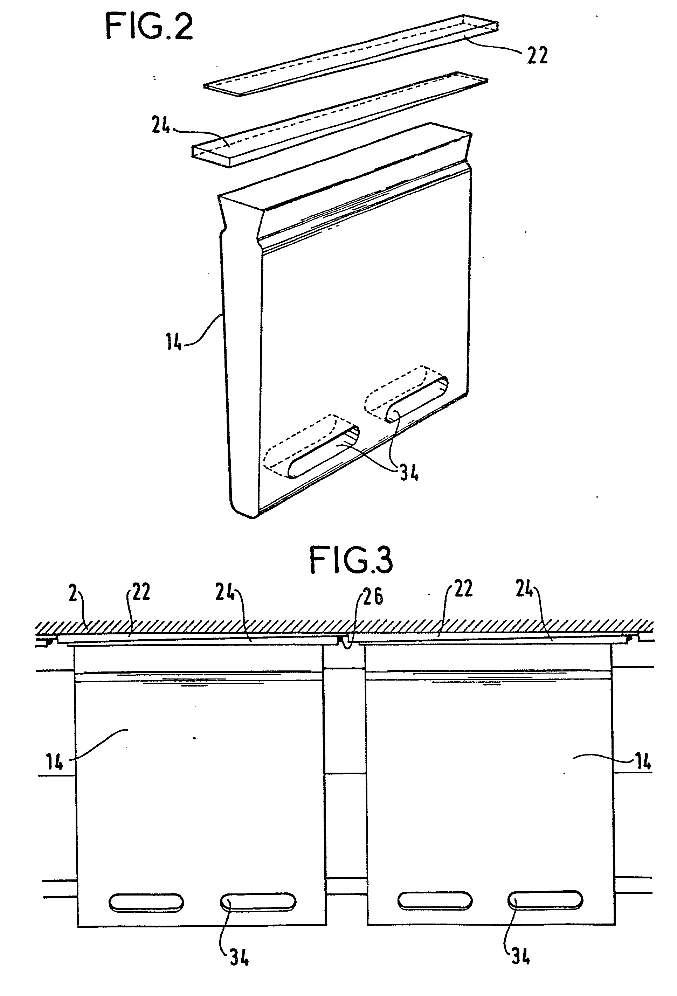

L'accrochage de ces dents résulte de l'engagement de leurs pieds 18 dans les fentes 6. Les corps de ces dents forment saillie radiale vers l'intérieur à partir de la surface interne 4 du circuit magnétique. Pour assurer leur calage, ces dents sont munies de coins de calage radial 22, 24 à enfoncement longitudinal disposés contre la grande base du pied 18 de chaque dent 14 de manière à s'insérer entre cette grande base et le fond 10 de la fente 6 dans laquelle ce pied est engagé, à pousser ce pied radialement vers l'intérieur, et à assurer ainsi une compression tangentielle permanente du pied par appui sur les faces latérales de cette fente. Ces coins sont au nombre de deux par dent, de manière à assurer l'uniformité de la pression radiale, à savoir un coin externe 22 coopérant avec un coin interne 24 (voir figure 2).

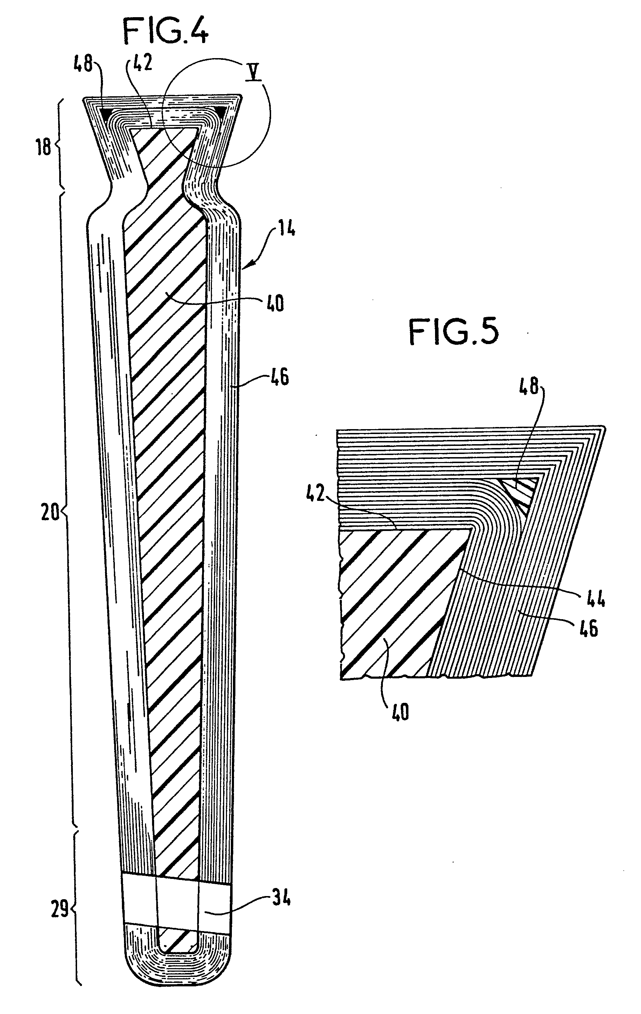

Conformément à la figure 3 un intervalle est ménagé entre deux dents qui se succèdent longitudinalement avec leurs pieds engagés dans une même fente longitudinale, de manière à permettre un enfoncement des coins de calage radial sans démontage des dents. Les coins externes 22 se succèdent longitudinalement sans intervalle et les coins internes 24 peuvent être fixés par un léger collage 26 après enfoncement.

La constitution interne des dents sera décrite plus loin. Elle permet, à l'aide de matériaux électriquement isolants, donc sans pertes électriques, de leur conférer une grande rigidité et une résistance mécanique suffisante.

Les dents d'accrochage angulairement successives 14, 16 sont alternativement une dent longue et une dent courte 16, les dents longues seules ayant une tête 29 dépassant radialement vers l'intérieur au-delà des barres d'enroulement.

Les moyens de calage tangentiel des barres 12 sont des coins enfoncés radialement vers l'extérieur insérés chacun entre des barres 12 d'enroulement et le flanc d'une dent courte 16 les dents courtes 16 présentant une largeur dans le sens tangentiel plus faible que celle des dents longues 14 pour permettre le logement de ces coins 28.

Les moyens de calage radial des barres 12 comportent des barrettes 30 fixées chacune aux têtes 29 de deux dents longues 14 angulairement successives et s'étendant tangentiellement de l'une à l'autre de ces têtes pour venir appuyer radialement vers l'extérieur sur les faces des barres d'enroulement 12 disposées entre ces deux dents longues.

Les coins à enfoncement radial 28 sont maintenus radialement par les barrettes 30.

Les barrettes 30 sont fixées et calées radialement par des clavettes à pente 32 à enfoncement tangentiel engagées dans des trous 34 des têtes des dents longues 14.

On va maintenant décrire la constitution interne des dents, qui est la même pour les dents longues 14 et les dents courtes 16.

Chacune de ces dents comporte :

— un noyau 40 s'étendant sur toute l'extension longitudinale de la dent, une partie de ce noyau étant disposée à l'intérieur du pied 18 de la dent et présentant une face de base 42 parallèle et en regard d'une partie médiane de la grande base du pied 18, et deux faces latérales 44 s'étendant vers le corps 20 de la dent à partir des bords latéraux de cette face de base 42, en se rapprochant progressivement l'une de l'autre,

— et une enveloppe 46 appliquée sur ce noyau, présentant une épaisseur sensiblement constante, et formant au moins la grande base et les deux côtés du pied 18 et les parois latérales du corps 20 de la dent, cette enveloppe étant constituée d'une superposition de couches de tissu d'armature disposées à la fois parallèlement à la direction longitudinale, et, en section par un plan perpendiculaire à cette direction, en suivant les faces de la dent, ces couches étant enrobées d'une résine durcie, de manière à conférer au pied 18 de la dent une résistance importante aux efforts de traction radiale vers l'intérieur, et à conférer à l'ensemble de la dent une résistance importante aux efforts de flexion autour d'axes longitudinaux.

Des inserts rectilignes 48 sont disposés longitudinalement entre deux couches de tissu de l'enveloppe 46 dans chacun des deux angles dièdres formés aux deux bords latéraux de la grande base du pied 18 de manière à éviter un arrondissement excessif de ces deux angles.

Le noyau 40 s'étend d'un seul tenant dans le pied 18 et dans le corps de chaque dent 14, en présentant un minimum d'épaisseur selon la direction tangentielle au voisinage de la petite base du pied 18 de la dent.

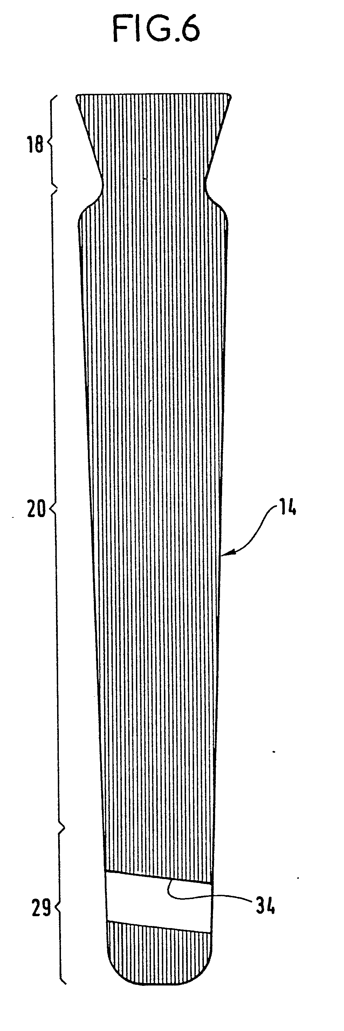

La constitution interne des dents, qui vient d'être décrite, semble être celle qui permet le plus facilement d'obtenir avec des matériaux isolants les qualités de résistance mécanique et de rigidité nécessaires, mais toute autre constitution interne qui permettrait d'obtenir ces mêmes qualités pourrait aussi bien être utilisée dans le cadre de l'invention. Il serait par exemple possible dans certains cas d'utiliser des dents du type représenté sur la figure 6, la dent étant alors formée par simple superposition de couches parallèles de tissu d'armature imprégnées de résine, et mise en forme ultérieure.

**Revendications**

1. Dispositif de fixation des barres d'enroulement statoriques (12) d'une machine dynamoélectrique tournante, pour fixer ces barres dans l'entrefer selon une direction « longitudinale » parallèle à l'axe de rotation du rotor en les appliquant contre la surface interne (4) du circuit magnétique statorique (2), cette surface présentant la forme générale d'un cylindre dont l'axe est l'axe de rotation du rotor, ce dispositif comportant :

— des dents d'accrochage non métalliques (14, 16) dont la forme générale est celle d'un prisme à génératrices longitudinales, ces dents (14, 16) présentant un pied (18) accroché au circuit magnétique statorique (2) et un corps (20) formant saillie radiale vers l'intérieur à partir de la surface interne (4) de ce circuit magnétique (2), ces dents (14, 16) étant réparties angulairement sur tout le tour de cette surface,

— des moyens de calage tangentiels pour caler les barres (12) d'enroulement entre les corps des dents angulairement successives,

— et des moyens de calage radial empêchant un déplacement radial des barres (12) d'enroulement par rapport aux corps de ces dents en appuyant ces barres contre la surface interne du circuit magnétique statorique (2),

ce dispositif étant caractérisé par le fait que les dents d'accrochage angulairement successives (14, 16) sont alternativement une dent longue (14) et une dent courte (16), les dents longues seules ayant une tête (29) dépassant radialement vers l'intérieur au-delà des barres d'enroulement (12),

— les moyens de calage tangentiel des barres (12) étant des coins (28) à enfoncement radial vers l'extérieur insérés chacun entre des barres (12) d'enroulement et le flanc d'une dent (16) pour serrer ces barres entre ce coin et le flanc d'une autre dent (14),

— les moyens de calage radial des barres (12) comportant des barrettes (30) fixées aux têtes (29) des seules dents longues (14) et s'étendant tangentiellement entre ces têtes pour venir appuyer radialement vers l'extérieur sur les faces des barres d'enroulement (12) disposées entre ces dents longues.

2. Dispositif selon la revendication 1, caractérisé par le fait que lesdits coins à enfoncement radial (28) sont maintenus radialement par lesdites barrettes (30).

3. Dispositif selon la revendication 1, caractérisé par le fait que les barrettes (30) sont fixées et calées radialement par des clavettes à pente (32) à enfoncement tangentiel engagées dans des trous (34) des têtes (29) des dents longues (14), chaque barrette s'étendant entre les têtes (29) de deux dents longues (14) angulairement successives.

4. Dispositif selon la revendication 1, caractérisé par le fait que les coins à enfoncement radial (28) sont insérés entre les barres d'enroulement (12) et le flanc des seules dents courtes (16) pour serrer ces barres contre le flanc des dents longues (14), les dents courtes (16) présentant une largeur dans le sens tangentiel plus faible que celle des dents longues (14) pour permettre le logement de ces coins (28).

**Claims**

1. A device for fixing stator winding bars (12) of a dynamoelectric machine, for fixing these bars in the air-gap according to a « longitudinal » direction parallelly to the rotation axis of the rotor by pressing them against the inner surface (4) of the stator magnetic circuit (2), this surface presenting the general form of a cylinder, the axis of which is the rotation axis of the rotor, this device comprising

— non-metallic fixing teeth (14,16), the general form of which is that of a prism with longitudinal generatrix lines, these teeth (14, 16) presenting a foot (18) fixed to the stator magnetic circuit (2), and a body (20) protruding radially inwards from the inner surface (4) of this magnetic circuit (2), these teeth (14, 16) being spaced out angularly all around said surface,

— tangential wedging means for wedging the winding bars (12) between the bodies of angularly successive teeth,

— and radial wedging means preventing a radial movement of the winding bars (12) relative to the bodies of these teeth by pressing said bars against the inner surface of the stator magnetic circuit (2),

characterized in that the angularly successive fixing teeth (14, 16) are alternately a long tooth (14) and a short tooth (16), with only the long teeth having a head (29) protruding radially inwards beyond the winding bars (12),

— the means for tangentially wedging the bars (12) being wedges (28) which are radially driven outwards and inserted each between winding bars (12) and the flank of a tooth (16) to clamp these bars between this wedge and the flank of another tooth (14),

— the means for radially wedging the bars (16) comprising plates (30) fixed to the heads of only the long teeth (14) and extending tangentially between these heads in order to press radially outwards on the faces of the winding bars (12) disposed between these long teeth.

2. A device according to claim 1, characterized in that said radially driven wedges (28) are radially held by said plates (30).

3. A device according to claim 1, characterized in that the plates are radially fixed and wedged by tapering pins (32) driven tangentially which are engaged in holes (34) of the heads (29) of the long teeth (14), each pin extending between the heads (29) of two angularly successive long teeth (14).

4. A device according to claim 1, characterized in that the radially driven wedges (28) are inserted between the winding bars (12) and the flank of only the short teeth (16) for clamping these bars against the flank of long teeth (14), the short teeth (14) presenting a width in the tangential direction which is smaller than that of the long teeth (14) for permitting the accomodation of these wedges (28).

**Ansprüche**

1. Vorrichtung zur Befestigung von Statorwicklungsstäben (12) einer rotierenden dynamoelektrischen Maschine, um diese Stäbe im Luftspalt gemäß einer « Längs »-Richtung parallel zur Rotationsachse des Rotors zu befestigen, indem sie gegen die innere Oberfläche (4) des Stator-Magnetkreises (2) gedrückt werden, wobei diese Oberfläche die allgemeine Form eines Zylinders aufweist, dessen Achse die Rotationsachse des Rotors ist, und wobei diese Vorrichtung aufweist

— nicht-metallische Befestigungszähne (14, 16), deren allgemeine Form die eines Prismas mit Mantellinien in Längsrichtung ist, wobei diese Zähne (14, 16) einen Fuß (18) aufweisen, der am Stator-Magnetkreis (2) befestigt ist, und einen Körper (20), der radial nach innen ausgehend von der inneren Oberfläche (4) dieses Magnetkreises (2) vorsteht, wobei diese Zähne (14, 16) winkelmäßig über den ganzen Umfang dieser Oberfläche verteilt sind,

— tangentiale Verkeilungsmittel, um die Wicklungsstäbe (12) zwischen den winkelmäßig aufeinanderfolgenden Körpern der Zähne zu verkeilen,

— und Mittel zur radialen Verkeilung, die eine radiale Verschiebung der Wicklungsstäbe (12) in bezug auf die Körper dieser Zähne verhindern, indem sie diese Stäbe gegen die innere Oberfläche des Stator-Magnetkreises (2) drücken, dadurch gekennzeichnet, daß die winkelmäßig aufeinanderfolgenden Befestigungszähne (14, 16) abwechselnd als ein langer (14) und ein kurzer Zahn (16) ausgebildet sind, wobei nur die langen Zähne einen Kopf (29) aufweisen, der radial nach innen über die Wicklungsstäbe (12) vorsteht,

— daß die tangentialen Verkeilungsmittel der Stäbe (12) Keile (28) sind, die radial nach außen eingedrückt sind und je zwischen Wicklungsstäbe (12) und die Flanke eines Zahns (16) eingeschoben sind, um diese Stäbe zwischen diesem Keil und der Flanke eines anderen Zahns (14) festzudrücken,

— und daß die Mittel zur radialen Verkeilung der Stäbe (12) Platten (30) aufweisen, die an den Köpfen (29) nur der langen Zähne (14) befestigt sind und sich tangential zwischen diesen Köpfen erstrecken, um radial nach außen auf die Flächen der zwischen diesen langen Zähnen angeordneten Wicklungsstäbe (12) zu drücken.

2. Vorrichtung nach Anspruch 1, dadurch gekennzeichnet, daß die radial nach außen eingedrückten Keile (28) radial von den Platten (30) gehalten werden.

3. Vorrichtung nach Anspruch 1, dadurch gekennzeichnet, daß die Platten (30) radial von schrägen Keilen (32), die tangential eingedrückt und in Löcher (34) der Köpfe (29) der langen Zähne (14) eingesetzt sind, befestigt und verkeilt werden, wobei jede Platte sich zwischen den Köpfen (29) zweier winkelmäßig aufeinanderfolgender langer Zähne (14) erstreckt.

4. Vorrichtung nach Anspruch 1, dadurch gekennzeichnet, daß die radial nach außen eingedrückten Keile (28) zwischen die Wicklungsstäbe (12) und die Flanke nur der kurzen Zähne (16) eingeschoben sind, um diese Stäbe gegen die Flanke der langen Zähne (14) zu drücken, wobei die kurzen Zähne (16) eine Breite in tangentialer Richtung aufweisen, die geringer ist als die der langen Zähne (14), um das Einführen dieser Keile (28) zu ermöglichen.

FIG.1

0 045 920

FIG.2

FIG.3

FIG.4

FIG.5

# FIG.6